# EUROPEAN PATENT APPLICATION

(11) **EP 0 980 748 A1**
(43) Date of publication of application: **23.02.2000**
(21) Application number: 99111719.3
(22) Date of filing: 17.06.1999
(51) Int. Cl.: B29C 65/18, B29C 65/32

(54) **Device for bonding a tear-off strip to a web**

(30) Priority: 24.07.1998 IT BO980456
(71) Applicant: G.D. S.p.A., 40133 Bologna (IT)
(72) Inventor: Draghetti, Fiorenzo, 40060 Villafontana Di Medicina (IT)
(74) Representative: Giambrocono, Alfonso, Dr. Ing.

(57) **Abstract**

A device (1) for bonding a tear-off strip (2) to a web (3) of thermoplastic material is provided with first guide means (5, 6) common to the web (3) and to the tear-off strip (2) such that the web (3) and strip (2) extend along a first common path (P) in a position in which the strip (2) is arranged in contact with the web (3), and at least one bonder (9; 10) positioned along the first path (P) and provided with a bonding belt (15; 26) and with second guide means (11, 12; 22, 23) to advance the belt (15; 26) and position it substantially in contact with the strip (2) or with the web (3) in correspondence with the strip (2) along at least a part of the first path (P).

## Description

This invention relates to a device for bonding a tear-off strip to a web.

In particular, the invention relates to the bonding of a tear-off strip to a propylene web used for wrapping cigarette packets within an overwrapping machine, to which this description makes explicit reference but without losing its generality on this account.

In overwrapping machines, the polypropylene is cut into sheets to form a wrapper which is wrapped about the packets to insulate the cigarettes and protect them from external atmospheric conditions, and is opened by the said tear-off strip which, when pulled, separates the wrapper into two portions.

Generally, the tear-off strip is bonded to the polypropylene web by devices provided with guide means common to the web and to the strip in order to guide the strip in contact with the web into a determined position, and with heated rollers about part of which the web and strip pass to achieve partial melting of both the strip and the web in order to intimately join the strip to the web, or in other words to form the bond.

Known devices of the aforedescribed type suffer from drawbacks in that they heat the entire web rather than just that web portion lying along the strip. In this manner the web suffers damage, and in particular becomes stretched because during bonding the web and strip remain taut between the said guide means, the heating of the entire width of the web resulting in a reduction in its resistance to traction.

To obviate this drawback it is known from patent application EP-A-569807 to use a bonding device provided with a bonding roller comprising a heating ring, which is insulated thermally by two roller portions lying on opposite sides of said ring. The said bonding roller has the advantage of concentrating the heat transmission within that web region corresponding to the tear-off strip. Apart from said advantage the device presents drawbacks, one of which is inherent in the use of the roller as a bonding element. In this respect, in these bonding roller devices the web and strip pass about part of the roller in order to maintain the web and strip in contact with the heat source for a determined time. If the web and strip feed rate increases, the angle through which they remain in contact with the roller has to be increased in order to maintain heat passage for an acceptable time to achieve the heat transfer necessary for melting part of the web and strip in order to form the bond.

Obviously the contact angle cannot be increased beyond a determined limit depending on the roller diameter. On the other hand the ring temperature cannot be increased because a too sudden temperature change could damage both the web and the strip.

A solution to the aforesaid drawback could be to increase the diameter of the roller which, however, on the one hand would become extremely heavy to the extent of requiring appropriately designed supports, and on the other hand would assume relatively large overall dimensions.

The object of this invention is to provide a device for bonding a tear-off strip to a web which ensures an effective bond even when the web and strip advance at high speed.

The invention provides a device for bonding a tear-off strip to a web, the device comprising first guide means common to the web and to the tear-off strip such that the web and strip extend along a first common path in a position in which the strip is arranged in contact with said web, and at least one bonder positioned along said first path, the device being characterised in that said bonder comprises at least one bonding belt and second guide means to advance said belt and position it substantially in contact with said strip, or with said web in correspondence with said strip, along at least a part of said first path.

The invention is described hereinafter with reference to the accompanying drawings, which show a non-limiting embodiment thereof and on which:
Figure 1 is a schematic side elevation of a preferred embodiment of a device according to the invention;
Figure 2 is a schematic section on the line II-II of Figure 1, with parts removed for clarity;
Figure 3 is an enlarged detail of Figure 2;
Figure 4 is a schematic side elevation of a modification of the device for bonding a tear-off strip of Figure 1;
Figure 5 is a schematic section on the line V-V of Figure 4, with parts removed for clarity;
Figure 6 is an enlarged detail of Figure 5.

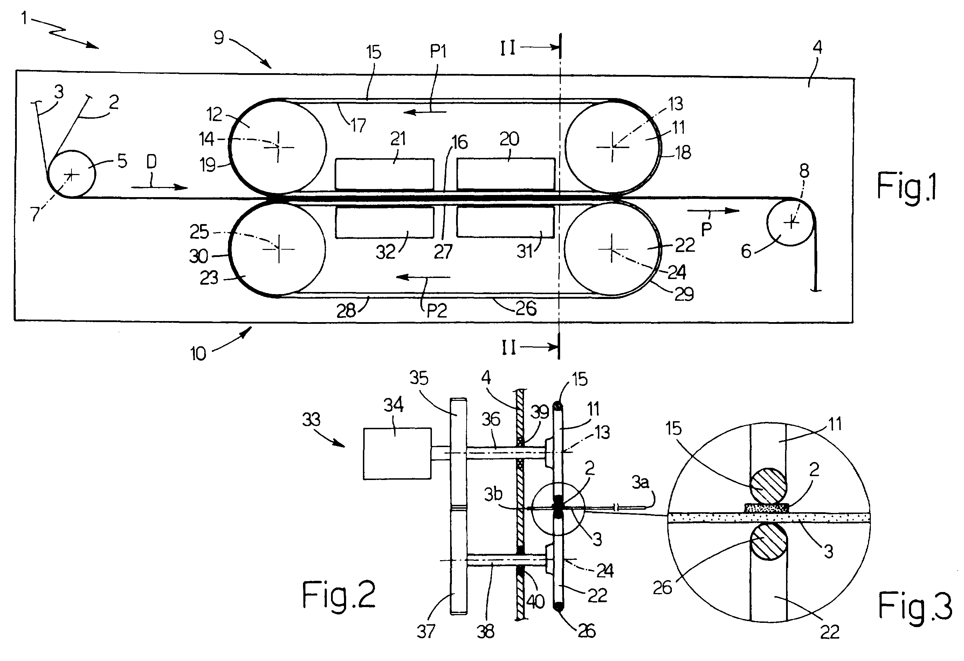

In Figure 1 the reference numeral 1 indicates a device for bonding a tear-off strip 2 to a polypropylene web 3, which is unwound from a reel, not shown, and extends for a determined width between an edge 3a and an edge 3b, to be used to form wrappers of known type, not shown, wrapped about cigarette packets of known type, not shown. The strip 2 is unwound from a reel, not shown, and has a negligible width compared with the width of the web 3.

The device 1 comprises a frame 4, on which an entry roller 5 and an exit roller 6 are mounted, the rollers 5 and 6 being rotatable about respective parallel axes 7 and 8 extending perpendicular to the plane of the sheet of Figure 1. The rollers 5 and 6 guide the strip 2 and web 3 in a direction D to define a rectilinear path P for the web 3 and strip 2. The path P extends between the rollers 5 and 6, along the said path P the strip 2 being superimposed on the web 3 in a determined position at a determined distance from the edge 3a the web 3.

The device also comprises a bonder 9 positioned above the path P and a bonder 10 positioned below the path P to form the bond between the tear-off strip 2 and the web 3. The bonder 9 comprises a drive pulley 11 and a driven pulley 12, these being rotatable about respective axes 13 and 14 in an anticlockwise direction in Figure 1. A belt 15 of substantially circular cross-section passes endlessly about the pulleys 11 and 12. Belt 15 is made of a material which can be heated by means of electromagnetic induction, e.g. a ferromagnetic material. The belt 15 defines an oblong path P1 having a lower rectilinear portion 16 and an upper rectilinear portion 17 which are joined together by two curved portions 18 and 19. Along the portion 16 the belt 15 extends parallel to the path P and is in contact with the strip 2. The bonder 9 also comprises two induction blocks 20 and 21 arranged in succession above the portion 16 and having two respective electrical windings of known type, not shown, for generating respective magnetic fields which encounter and heat the belt 15.

The bonder 10 comprises a drive pulley 22 and a driven pulley 23, these being rotatable about respective axes 24 and 25 in a clockwise direction in Figure 1. A belt 26 of substantially circular cross-section and constructed of a ferromagnetic material passes endlessly about the pulleys 22 and 23. The belt 26 defines an oblong path P2 having an upper rectilinear portion 27 and a lower rectilinear portion 28 which are joined together by two curved portions 29 and 30. Along the portion 27 the belt 26 extends parallel to the path P and is in contact with the web 3 in a region in correspondence with the strip 2. In other words the web 3 and the strip 2 are sandwiched between the belts 15 and 26 along the path P in correspondence with the portion 16 and 27. The bonder 10 also comprises two induction blocks 31 and 32 arranged in succession below the portion 27 and having two respective electrical windings of known type, not shown, for generating respective magnetic fields which encounter and heat the belt 26. With reference to Figure 2, the drive pulleys 11 and 22 of the respective bonders 9 and 10 have a common transmission comprising a motor 34 which rotates a
gear wheel 35 rotatable about a respective pin 36 coaxial with the axis 13 and engaging a gear wheel 37 rotatable about a pin 38 coaxial with the axis 24. The pins 36 and 38 are supported by respective bearings 39 and 40 mounted on the frame 4 and connect the gear wheels 35 and 37 to the respective pulleys 11 and 12. The motor 34 is a variable speed motor to adapt the belt speed to the advancement speed of the web 3 and strip 2.

When in use, a web 3 is guided by the rollers 5 and 6 along the path P in the direction D, a strip 2 being simultaneously guided by the rollers 5 and 6 along the same path P and in the same direction D so as to lie on the web 3 and in contact with the web 3 along the path P as clearly shown in Figure 2 and 3. During their advancement along the path P the strip 2 and web 3 extend taut between the rollers 5 and 6 and are sandwiched between the belts 15 and 26, which are heated by means electric current generated in the belts by respective inductors 20, 21 and 31, 32 to obtain temporary partial melting both of the strip 2 and of that portion of the web 3 in contact with the strip 2. In practice, the belts 15 and 26 are heated along their portions 16 and 27 respectively, these transferring part of the heat to the web 3 and strip 2, whereas the belts 15 and 26 cool along the portions 17, 18 and 19 in the case of the belt 15 and along the portions 28, 29 and 30 in the case of the belt 26. The strip 2 and web 3 begin to cool along the path P downstream of the pulleys 11 and 22.

The heating intensity of the belts 15 and 26 is regulated on the basis of the advancement speed of the strip 2 and web 3, which determines the advancement speed of the belts 15 and 26, and on the basis of the thermal conductivity of the material used to construct the belts 15 and 26. For this purpose, with the device 1 the inductors 20 and 21 are set to an intensity which can be varied such as to achieve the required heat transfer between the belts 15, 26 and the strip 2 and web 3.

In a modified embodiment, not shown, the inductors 31 and 32 are omitted, the belt 26 performing only the mechanical function of counteracting the belt 15.

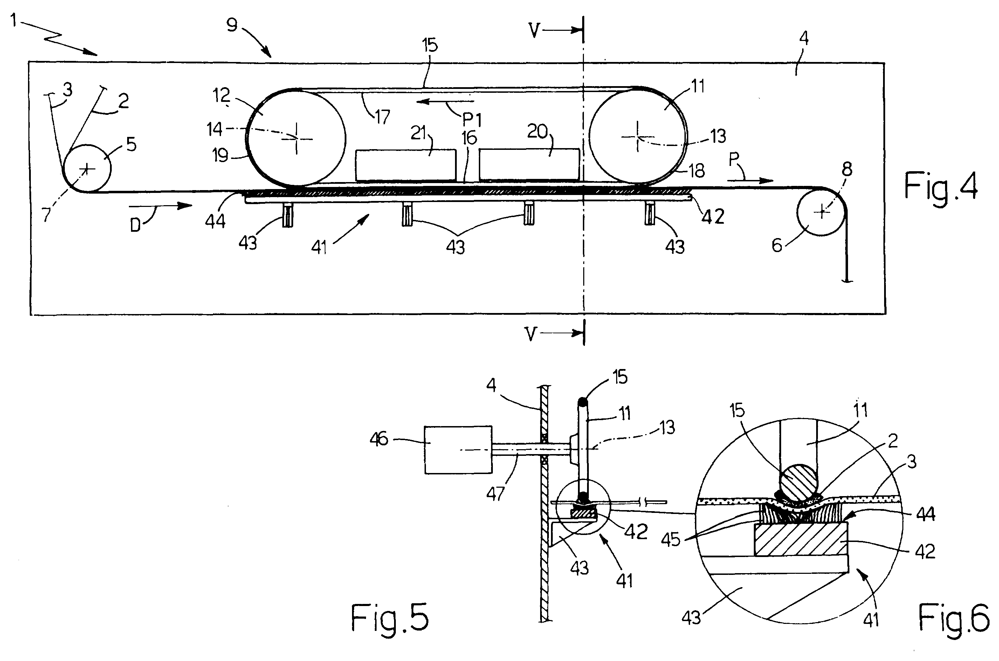

In the modified embodiment shown in Figures 4, 5 and 6, the bonder 10 is omitted and replaced by a guide 41, which comprises an elongate plate 42 supported by brackets 43 fixed to the frame 4. The plate 42 extends parallel to the path P along the portion 16 between the pulleys 11 and 12 and has an upper face 44 provided with bristles 45, which extend substantially upwards and are arranged in contact with the web 3.

As can be best seen from Figure 6, the purpose of the bristles 45 is to support the web 3 along the portion 16 and to counteract the action of the belt 15. The bristles have a determined elasticity such as to deform under the thrust of the belt 15. In other words, the bristles 45 urge the web 3 upwards, this then tending to partially wrap about the profile of the belt 15 and also cause the strip 2 to wrap about the same belt 15.

As shown in Figure 5, a motor 46 drives the pulley 11 via a pin 47 coaxial with the axis 13.

With the described modified embodiment better heat transfer can be achieved, in consideration of the fact that the web 3 and the strip 2 are maintained in contact with a larger surface area of the belt 15.

In further modified embodiments, not shown, the belt 15 or both belts 15 and 26 can have other than circular cross-sections. In this respect, a triangular cross-section is particularly functional in the case of two counteracting belts 15 and 26 having two parallel faces with a width equal to the width of the strip 2.

## Claims

1. A device for bonding a tear-off strip (2) to a web (3), the device (1) comprising first guide means (5, 6) common to the web (3) and to the tear-off strip (2) such that the web (3) and strip (2) extend along a first common path (P) in a position in which the strip (2) is arranged in contact with said web (3), and at least one bonder (9; 10) positioned along said first path (P), the device (1) being characterised in that said bonder (9; 10) comprises at least one bonding belt (15; 26) and second guide means (11, 12; 22, 23) to advance said belt (15; 26) and position it substantially in contact with said strip (2), or with said web (3) in correspondence with said strip (2), along at least a part of said first path (P).

2. A device as claimed in claim 1, characterised in that said first path (P) is a rectilinear path extending between said first guide means (5, 6).

3. A device as claimed in claim 1 or 2, characterised in that said belt (15; 26) passes endlessly about said second guide means (11, 12; 22, 23) and extends along a second determined path (P1; P2), said second path (P1; P2) having a portion (16; 27) substantially in common with said first path (P).

4. A device as claimed in claim 3, characterised in that said bonder (9; 10) comprises heating means (20, 21; 31, 32) for heating said belt (15; 26), said heating means being positioned along said second path (P1; P2).

5. A device as claimed in claim 4, characterised in that said heating means (20, 21; 31, 32) comprise a first and a second inductor (20, 21; 31, 32) positioned along said portion (16; 27) of said second path (P1; P2).

6. A device as claimed in any one of claims 1 to 5, characterised by comprising, for said belt (15), counteracting means (26; 41) for clamping said web (3) and said strip (2) between said belt (15) and said counteracting means (26; 41).

7. A device as claimed in claim 6, characterised in that said counteracting means (41) comprise a plate (42) provided with a face (44) supporting deformable bristles (45).

8. A device as claimed in claim 6, characterised in that said counteracting means (26) comprise a further belt (26) extending endlessly about a pair of further pulleys (22, 23).

9. A device as claimed in claim 8, characterised in that said further belt (26) extends along a third path (P2), said third path (P2) comprising a portion (27) substantially in common with said first path (P) and substantially coinciding with said portion (16) of the second path (P1).

10. A device as claimed in claim 9, characterised in that said further belt (26) forms part of a further bonder (10), said further bonder (10) comprising, for said further belt (26), heating means (31, 32) positioned along said third path (P2).

11. A device as claimed in claim 10, characterised in that said heating means (31, 32) comprise a third and a fourth inductor (31, 32) positioned along said portion (27) of said third path (P2).
